Europäisches Patentamt

European Patent Office

Office européen des brevets

(11) Publication number: **0 234 052**
**A1**

## (12) EUROPEAN PATENT APPLICATION

(21) Application number: **86200264.9**

(51) Int. Cl.⁴: **F02M 31/12**

(22) Date of filing: **20.02.86**

(43) Date of publication of application:
**02.09.87 Bulletin 87/36**

(84) Designated Contracting States:
**AT BE CH DE FR GB IT LI LU NL SE**

(71) Applicant: **Texas Instruments Holland B.V.**
**Kolthofsingel 8 Postbox 43**
**NL-7600 AA Almelo(NL)**

(72) Inventor: **van der Ploeg, Arie**
**Larixlaan 12**
**NL-7642 VA Wierden(NL)**
Inventor: **Gerson, Philips Maurits**
**Arnhemsestraatweg 18**
**NL-6881 NG Velp(NL)**

(74) Representative: **Kooy, Leendert Willem et al**
**OCTROOIBUREAU VRIESENDORP & GAADE**
**P.O. Box 266**
**NL-2501 AW The Hague(NL)**

(54) Liquid heating device.

(57) THE INVENTION RELATES TO A HEATING DE-
VICE FOR A FLUID, IN PARTICULAR A LIQUID
FUEL WHICH IS INJECTED AS A MIST ON THE
HEATING DEVICE (3) IN AN INLET AIR CONDUIT -
(2) BY MEANS OF AN INJECTION DEVICE (1), THE
HEATING DEVICE EXTENDING PARALLELY TO
THE MAIN STREAM OF THE INLET AIR IN THE
INLET AIR CONDUIT AND BEING POSITIONED IN
THE AREA IN WHICH THE FIRST MIXING OF FUEL
AND AIR OCCURS.

FIG.1

## LIQUID HEATING DEVICE IN PARTICULAR FOR LIQUID FUELS

THE INVENTION RELATES TO A HEATING DEVICE FOR A LIQUID, IN PARTICULAR LIQUID FUEL, WHICH IS INJECTED AS A MIST ON THE HEATING DEVICE IN A INLET AIR CONDUIT BY MEANS OF AN INTERJECTION DEVICE.

A SIMILAR HEATING DEVICE IS GENERALLY KNOWN.

IN THE CASE OF COLDSTARTING OF COMBUSTION ENGINES, PROBLEMS WITH RESPECT TO THE EVAPORATION OF THE FUEL INJECTED TO BE MIXED WITH AIR PRESENT THEMSELVES IN THE AREA OF THE FIRST MIXING OF FUEL AND AIR.

THE DEGREE OF EVAPORATION OF THE DROPS FORMED DEPENDS ON THE AMBIENT TEMPERATURE. THE HEAT REQUIRED FOR EVAPORATION WILL BE TAKEN FROM THE ATMOSPHERE. IN CASE OF A LOW AMBIENT TEMPERATURE EVAPORATION WILL BE INCOMPLETE AND A CONDENSATION OF THE FUEL WILL OCCUR, AS A RESULT OF WHICH THE MIXTURE HOMOGENITY AND THEREWITH THE MIXTURE DISTRIBUTION LEAVES MUCH TO BE DESIRED.

IT IS KNOWN THAT FOR SOLVING THIS PROBLEM EITHER A HEAT PLATE IN THE WALL AROUND THE AIR STREAM OR A GRATE POSITIONED TRANSVERSELY TO THE INLET STREAM IN THE AIR CONDUIT IS APPLIED. THE HEAT PLATE IS POSITIONED IN THE INLET AIR CONDUIT OPPOSITE TO THE FUEL INJECTION DEVICE AND MAY COMPRISE AN ENLARGED SURFACE, FOR INSTANCE IN THE FORM OF PINS, RIBS OR OTHER SHAPES, FOR INCREASING THE HEAT TRANSFER.

THE GRATE MACY CONSIST OF PTC MATERIAL, FOR INSTANCE AS DEFINED IN US PATENT SPECIFICATION 4,279,234 AND IS FITTED TRANSVERSELY TO THE MAIN STREAM OF THE AIR FEED.

BOTH SOLUTIONS HAVE AS A DRAWBACK THAT MIXING AND HEAT TRANSFER ARE NOT OPTIMAL AND THAT THE FLOW RESISTANCE IS GREAT, WHICH MEANS LOSS OF POWER, ALSO WHEN NO HEAT NEEDS TO BE FED TO THE MIXTURE.

THE INVENTION AIMS AT ELIMINATING THE ABOVE-MENTIONED DRAWBACKS, WITH CONSERVATION OF THE HOMOGENOUS DISTRIBUTION OF THE GAS/LIQUID MIXTURE, AND HAS AS A FEATURE FOR THAT PURPOSE THAT THE HEATING MEMBER EXTENDS PARALLELLY TO THE MAIN STREAM OF THE INLET AIR IN THE INLET AIR CONDUIT AND IS POSITIONED IN THE AREA IN WHICH THE FIRST MIXING OF FUEL AND AIR OCCURS.

BY APPLICATION OF THESE MEASURES A HOMOGENEOUS MIXING AND HEATING OF ATOMISED FUEL AND AIR IS OBTAINED IN THE AREA OF MIXTURE EVAPORATION SO THAT A DIRECT CONTACT BETWEEN THE ATOMISED FUEL AND THE AIR TAKES PLACE, THE FUEL AND AIR FLOWS BEING ONLY SLIGHTLY INFLUENCED.

THE LIQUID PARTICLES ARE PARTIALLY INJECTED THROUGH THE GRATE, AS A RESULT OF WHICH THE DISTURBANCE OF THE HOMOGENEOUS DISTRIBUTION OF THE FUEL OVER THE AIR IS KEPT AT A MINIMUM. THE HEATING DEVICE IS POSITION IN THE MAIN STREAM OF THE INLET AIR IN SUCH A WAY THAT THE FLOW RESISTANCE IS MINIMIZED AND THE HEAT TRANSFER TO THE FUEL (AND THEREFORE THE EVAPORATION) IS AT A MAXIMUM.

THE INVENTION WILL FURTHER BE ILLUSTRATED WITH THE AID OF THE DRAWING.

FIG. 1 SHOWS IN OUTLINE AN EXAMPLE OF A HEATING DEVICE ACCORDING TO THE INVENTION, IN CONJUNCTION WITH A FUEL INJECTION DEVICE.

FIG. 2 SHOWS IN OUTLINE AN EXAMPLE OF A HEATING MEMBER ACCORDING TO THE INVENTION, IN CONJUNCTION WITH A FUEL INJECTION MEMBER, DIFFERENTLY POSITIONED.

THE FUEL INJECTION DEVICE 1 IS FITTED ON AN INLET AIR CONDUIT 2 IN WHICH THE HEATING DEVICE 3 ACCORDING TO THE INVENTION IS POSITIONED PARALLEL TO THE MAIN STREAM OF THE INLET AIR AND IN THE AREA IN WHICH THE FIRST MIXING OF FUEL AND AIR TAKES PLACE.

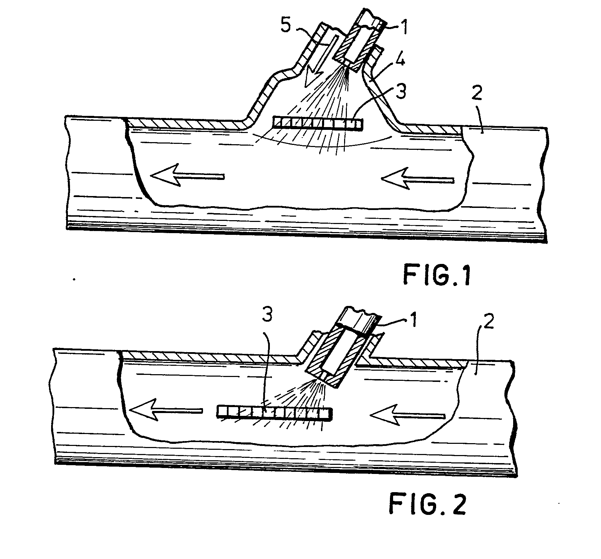

IN FIG. 1 THE HEATING MEMBER 3, WHICH HAS THE SHAPE OF A HONEY COMB SHAPED GRATE AND WHICH IS MADE OF CERAMIC PTC MATERIAL, POSITIONED IN A RECESS 4 IN THE WALL OF THE INLET AIR CONDUIT 2 AND IN THE LONGITUDINAL DIRECTION OF THIS CONDUIT, AND IN AN AREA WHERE THE FIRST MIXING OF FUEL AND AIR OCCURS. THE INJECTION DEVICE 1 FOR LIQUID FUEL IS ALSO POSITIONED IN THE RECESS 4 IN THIS FIGURE, THE CENTERLINE OF THE INJECTION MEMBER, VIEWED IN THE FLOW DIRECTION OF THE INLET AIR, MAY BE AT AN ACUTE ANGLE WITH THE HEATING MEMBER.

INSIDE OR OUTSIDE THE INJECTION DEVICE AIR 5 IS FED TO THE ATOMISED FUEL FROM THE INJECTION MEMBER THROUGH A SUPPLY OPENING IN AN ALREADY WELL-KNOWN MANNER.

THE INJECTION DEVICE 1 IN FIGURE 2 IS POSITIONED IN THE WALL OF THE CONDUIT 2. THE HEATING MEMBER 3 IS PRESENT IN THE CENTER OF AND PARALLEL TO THE MAIN STREAM IN THE INLET AIR CONDUIT AND IN THE AREA IN WHICH THE FIRST MIXING OF FUEL AND AIR OCCURS. HERE THE HEATING MEMBER 3 IS ALSO FORMED BY A HONEY COMB SHAPED GRATE WHICH IS MADE OF CERAMIC PTC MATERIAL. THIS MEMBER MAY, AS FAR DESIGNING IS CONCERNED, BE CONSTRUCTED IN OPTIMIZED FORM FLOW-TECHNICALITY IN MANNERS ALREADY KNOWN.

THE GRATE SHOWN IN FIGURES 1 AND 2 MAY BE REPLACED BY A PERFORATED PLATE WITH PTC ELEMENTS (NOT SHOWN) ATTACHED TO IT.

## Claims

1. A HEATING DEVICE FOR A LIQUID, IN PARTICULAR A LIQUID FUEL, WHICH IN THE FORM OF A MIST IS INJECTED ON THE HEATING DEVICE IN AN INLET AIR CONDUIT BY MEANS OF AN INJECTION DEVICE, CHARACTERIZED IN THAT THE HEATING DEVICE (1) EXTENDS PARALLEL TO THE MAIN STREAM OF THE INLET AIR IN THE INLET AIR CONDUIT (2) AND IS POSITIONED IN THE AREA IN WHICH THE FIRST MIXING OF FUEL AND AIR OCCURS.

2. A HEATING DEVICE ACCORDING TO CLAIM 1, CHARACTERIZED IN THAT THIS DEVICE CONSISTS OF A HONEY COMB SHAPED GRATE OF CERAMIC PTC MATERIAL.

3. A HEATING DEVICE ACCORDING TO CLAIM 1, CHARACTERIZED IN THAT THE DEVICE CONSISTS OF A PERFORATED PLATE WITH PTC ELEMENTS ATTACHED TO IT.

4. A HEATING DEVICE ACCORDING TO CLAIM 1, 2 AND 3, CHARACTERIZED IN THAT THE MEMBER IS POSITIONED IN A RECESS (4) IN THE WALL OF THE INLET AIR CONDUIT (2), IN TO WHICH RECESS THE INJECTION MEMBER (1) FITS.

5. A HEATING DEVICE ACCORDING TO CLAIMS 1, 2 AND 3, CHARACTERIZED IN THAT THIS DEVICE IS POSITIONED IN THE CENTER OF THE MAIN STREAM IN THE INLET AIR CONDUIT.

6. A HEATING DEVICE ACCORDING TO ONE OR MORE OF THE PRECEDING CLAIMS, CHARACTERIZED IN THAT THE DESIGN OF THIS DEVICE IS FLOW TECHNICALLY OPTIMALIZED.

FIG.1

FIG.2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | FR-A-2 567 965 (DAIMLER-BENZ)<br>* Abstract; page 1, lines 1-6; page 3, lines 7-14,23-30; page 5, lines 3-33; page 6, lines 1-28; page 7, lines 1-21; figure 1 * | 1 | F 02 M 31/12 |
| Y | | 2-6 | |
| | --- | | |
| Y | PATENT ABSTRACTS OF JAPAN, vol. 9, no. 92 (M-373)[1815], 20th April 1985; & JP-A-59 218 355 (NIPPON DENSO K.K.) 08-12-1984<br>* Abstract * | 2 | |
| | --- | | |
| Y | EP-A-0 051 936 (TEXAS INSTRUMENTS)<br>* Page 7, lines 8-25; figure 2 * | 3 | |
| | --- | | **TECHNICAL FIELDS SEARCHED (Int. Cl.4)** |
| Y | DE-A-2 843 534 (TOYOTA)<br>* Figure 1; page 10, lines 3-12 * | 4 | F 02 M<br>F 02 N |
| | --- | | |
| Y | DE-A-3 247 978 (SIEBENSOHN)<br>* Abstract; page 5, paragraph 3; page 8, last 2 paragraphs; page 9; page 10, paragraphs 1,3; page 11, lines 1-4; figures * | 5,6 | |
| | --- | | |
| A | FR-A-2 194 885 (DAIMLER-BENZ)<br>* Figures 2-5; page 6, lines 12-31 * | 1,5 | |
| | ----- | | |

The present search report has been drawn up for all claims

| Place of search | Date of completion of the search | Examiner |
|---|---|---|
| THE HAGUE | 20-05-1987 | JORIS J.C. |